# FASCICULE DE BREVET EUROPEEN

(11) **EP 1 719 670 B1**
(45) Date de publication et mention de la délivrance du brevet: **10.09.2008**
(21) Numéro de dépôt: 06300399.0
(22) Date de dépôt: 24.04.2006
(51) Int. Cl.: B60R 21/34

(54) **Dispositif de sécurité d'un véhicule automobile comprenant une fixation élastiquement déformable**
Sicherheitseinrichtung für ein Fahrzeug mit einem elastisch verformbaren Element
Safety device for a vehicle comprising an elastically deformable fixing

(30) Priorité: 03.05.2005 FR 0504482
(43) Date de publication de la demande: 08.11.2006
(73) Titulaire: RENAULT S.A.S., 92100 Boulogne Billancourt (FR)
(72) Inventeur: Damoiseau, Eric, 78780 Maurecourt (FR)

(56) Documents cités:
- EP-A- 1 104 726
- DE-A1- 10 308 371
- DE-U1- 20 318 864
- FR-A- 2 852 563
- FR-A- 2 852 570

## Description

La présente invention concerne de manière générale les dispositifs de sécurité pour véhicule automobile qui interviennent en cas de choc contre le véhicule.

Elle concerne plus particulièrement un dispositif de sécurité destiné à lier une pièce mobile à une pièce fixe d'un véhicule automobile, comprenant un premier élément adapté à se déformer pour autoriser un déplacement en translation de ladite pièce mobile par rapport à ladite pièce fixe sous l'effet d'un effort appliqué à ladite pièce mobile.

L'invention trouve une application particulièrement avantageuse dans l'assemblage d'un enjoliveur moteur au dessus d'un bloc moteur du véhicule automobile.

### ARRIERE-PLAN TECHNOLOGIQUE

Les capots des véhicules automobiles sont en général conçus pour se déformer lors d'un choc entre un véhicule automobile et un piéton lorsque le piéton est précipité sur le capot.

Cette déformation permet au véhicule automobile d'emmagasiner une partie de l'énergie du choc afin d'épargner au piéton d'éventuelles lésions.

Pour cela, il est nécessaire de laisser un volume sous le capot dans lequel le capot peut se déformer sans rencontrer d'obstacle.

Ce volume est cependant généralement occupé par diverses pièces notamment par un enjoliveur moteur. L'enjoliveur moteur est un élément fixé au dessus du bloc moteur du véhicule automobile afin de limiter les nuisances sonores produites par le moteur. Il est pour cela disposé entre le moteur et le capot du véhicule automobile.

Généralement, l'encombrement d'un enjoliveur moteur est tel qu'il est en partie disposé dans le volume de déformation du capot. Afin de s'effacer lorsque le capot se déforme en cas de choc piéton, l'enjoliveur moteur est généralement fixé sur le bloc moteur du véhicule automobile au moyen de systèmes fusibles. Ces systèmes fusibles sont adaptés à se déformer plastiquement, voire même à se casser, lors d'un choc avec un piéton afin de permettre à l'enjoliveur moteur de s'abaisser contre le bloc moteur lorsque le capot exerce sur lui contrainte importante.

L'inconvénient principal d'un tel système de fixation fusible est qu'il est inutilisable après un tel choc car il s'est cassé ou déformé plastiquement. Un tel système présente en outre une difficulté d'assemblage sur le bloc moteur. En effet, l'opérateur qui réalise cet assemblage ne doit pas exercer une trop forte pression sur l'enjoliveur moteur afin de ne pas déformer plastiquement les systèmes fusibles à son insu. Cette déformation risquerait sinon de provoquer un dangereux défaut de fixation.

Afin de remédier aux inconvénients précités de l'état de la technique, la présente invention propose un dispositif de sécurité à déformation élastique.

Plus particulièrement, on propose selon l'invention un dispositif de sécurité tel que défini dans l'introduction, dans lequel il est prévu que ledit premier élément est un élément élastiquement déformable lié à l'une desdites pièces mobile et fixe et dans lequel il est prévu un arbre raccordé audit premier élément ainsi qu'à l'autre des deux pièces mobile et fixe, qui est apte à provoquer la déformation élastique dudit premier élément lorsque ladite pièce mobile reçoit ledit effort.

Un tel dispositif avec ces caractéristiques et ainsi que les caractéristiques du préambule de la revendication indépendante 1 est divulgué dans le document DE 203 18 864 U1.

Après un choc avec un piéton, la pièce mobile montée sur la pièce fixe au moyen du dispositif de sécurité conserve une fixation robuste qui ne nécessite pas obligatoirement d'être changée.

Par ailleurs, lors du montage de la pièce mobile sur la pièce fixe, l'opérateur peut déformer le dispositif de sécurité sans danger dans la mesure où ce dernier reprendra sa position initiale.

Selon une caractéristique du dispositif de sécurité conforme à l'invention, il comprend un deuxième élément adapté à absorber au moins une partie des vibrations de la pièce fixe, ce deuxième élément étant lié à la pièce du véhicule à laquelle est rattaché ledit premier élément et entourant ledit arbre de manière à former un guide lors d'un mouvement de coulissement relatif dudit deuxième élément par rapport audit arbre.

Ainsi, non seulement la pièce mobile est guidée en translation dans la direction voulue à l'aide de ce deuxième élément lorsqu'elle subie un effort, mais en outre, elle ne reçoit pas la totalité des vibrations produites par la pièce fixe. Le deuxième élément est en particulier conçu pour filtrer les vibrations correspondant à la fréquence de résonance de la pièce mobile.

Selon une caractéristique du dispositif de sécurité conforme à l'invention, l'arbre est rattaché à la pièce fixe et le premier élément à la pièce mobile.

Selon une autre caractéristique avantageuse du dispositif de sécurité conforme à l'invention, le premier élément est précontraint.

Ainsi, la pièce mobile reste fixe tant que l'effort auquel elle est soumise reste inférieur à un effort limite. Cette caractéristique permet par ailleurs de limiter la présence de vibrations de la pièce mobile.

Selon une autre caractéristique avantageuse du dispositif de sécurité conforme à l'invention, l'arbre est adapté à bloquer la déformation dudit premier élément lorsque l'effort appliqué à la pièce mobile est supérieur à un effort maximal.

Ainsi, le premier élément reste dans sa fourchette de déformation élastique et ne se déforme jamais plastiquement. Le dispositif peut donc toujours reprendre, après avoir été déformé, sa position initiale. Cette caractéristique de l'arbre permet en outre d'éviter que la pièce mobile ne vienne directement en contact de la pièce fixe et qu'elle ne l'endommage.

Selon une autre caractéristique du dispositif de sécurité conforme à l'invention, le premier élément et le deuxième élément sont soudés l'un à l'autre.

Selon une autre caractéristique du dispositif de sécurité conforme à l'invention, le premier élément et le deuxième élément sont emboîtés sur ladite pièce mobile de sorte qu'ils puissent être démontés.

Ainsi, le montage et la maintenance du dispositif de sécurité sont facilités.

Selon une autre caractéristique du dispositif de sécurité conforme à l'invention, le deuxième élément est une rondelle pourvue d'une ouverture centrale traversée par l'arbre qui présente une extrémité dont une face prend appui sur le premier élément et dont l'autre face s'appuie sur le deuxième élément lorsque ledit premier élément est dans un état non déformé.

Ainsi, dans l'état non déformé, le dispositif de sécurité maintient solidement la pièce mobile en position. En effet, la rondelle d'un côté et le premier élément de l'autre font pression sur l'extrémité de l'arbre de sorte que le dispositif, et par conséquent la pièce mobile, restent immobiles.

Selon une autre caractéristique du dispositif de sécurité conforme à l'invention, le premier élément est un plot réalisé en caoutchouc.

Selon une autre caractéristique du dispositif de sécurité conforme à l'invention, ladite pièce mobile est un enjoliveur moteur et ladite pièce fixe un bloc moteur du véhicule automobile.

### DESCRIPTION DETAILLEE D'UN EXEMPLE DE REALISATION

La description qui va suivre en regard des dessins annexés donnés à titre d'exemples non limitatifs, fera bien comprendre en quoi consiste l'invention et comment elle peut être réalisée.

Sur les dessins annexés :
- la figure 1a est une vue schématique en coupe d'un dispositif de sécurité à l'état non déformé selon l'invention ;
- la figure 1b est une vue schématique en coupe du dispositif de sécurité de la figure 1a à l'état déformé;
- la figure 2a est une vue schématique de dessous du premier élément déformable du dispositif de sécurité de la figure 1a ;
- la figure 2b est une vue schématique en perspective du deuxième élément filtrant du dispositif de sécurité de la figure 1a ;
- la figure 2c est une vue schématique en perspective de l'arbre du dispositif de sécurité de la figure 1 a ;
- la figure 3 est une vue schématique d'ensemble en perspective du dispositif de sécurité de la figure 1a ; et

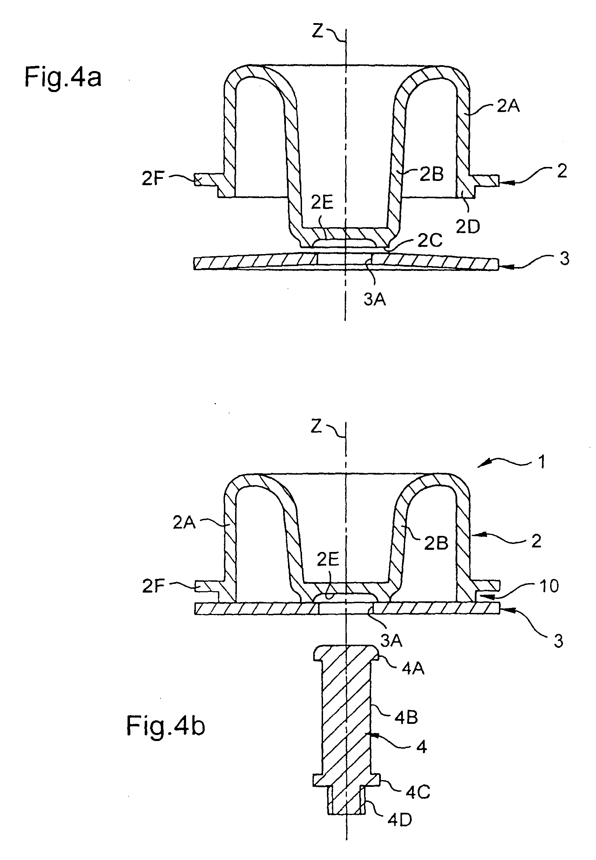

- les figures 4a et 4b sont des schémas de principe d'assemblage du dispositif de sécurité de la figure 1a.

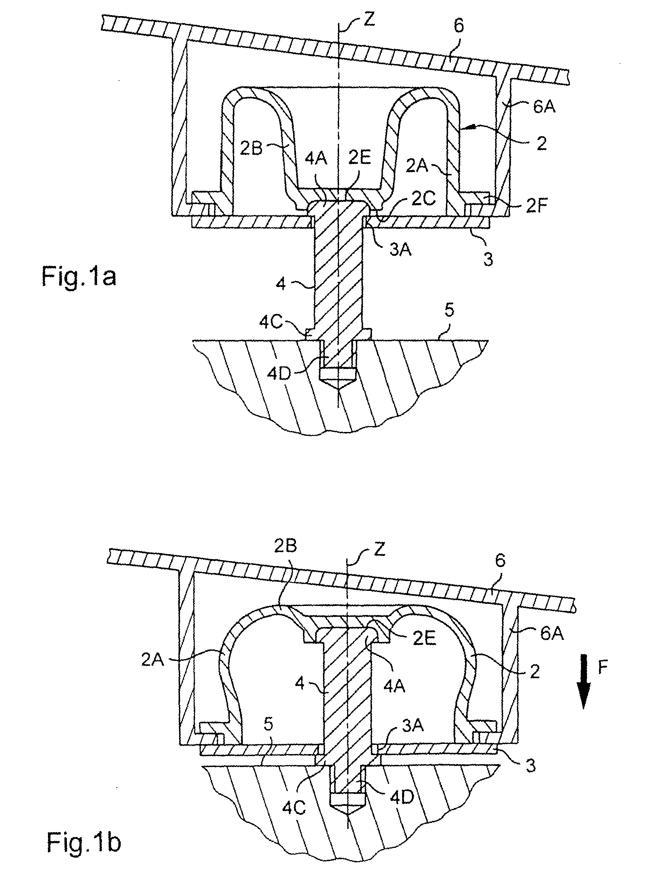

Sur les figures 1 a et 3, on a représenté un dispositif de sécurité 1 comprenant, d'une part, un arbre 4 et un premier élément 2 déformable qui permettent de lier une pièce mobile 1, ici un enjoliveur moteur 6, à une pièce fixe 5, ici un répartiteur d'air 5 d'un moteur d'un véhicule automobile, et, d'autre part, un deuxième élément 3 filtrant.

Selon une caractéristique particulièrement avantageuse de l'invention, le premier élément 2 est un élément élastiquement déformable qui permet au dispositif de sécurité 1, par exemple lors d'un choc du véhicule automobile contre un piéton, de se déformer puis de reprendre sa forme et sa position initiales. Le dispositif de sécurité 1 est ainsi réutilisable.

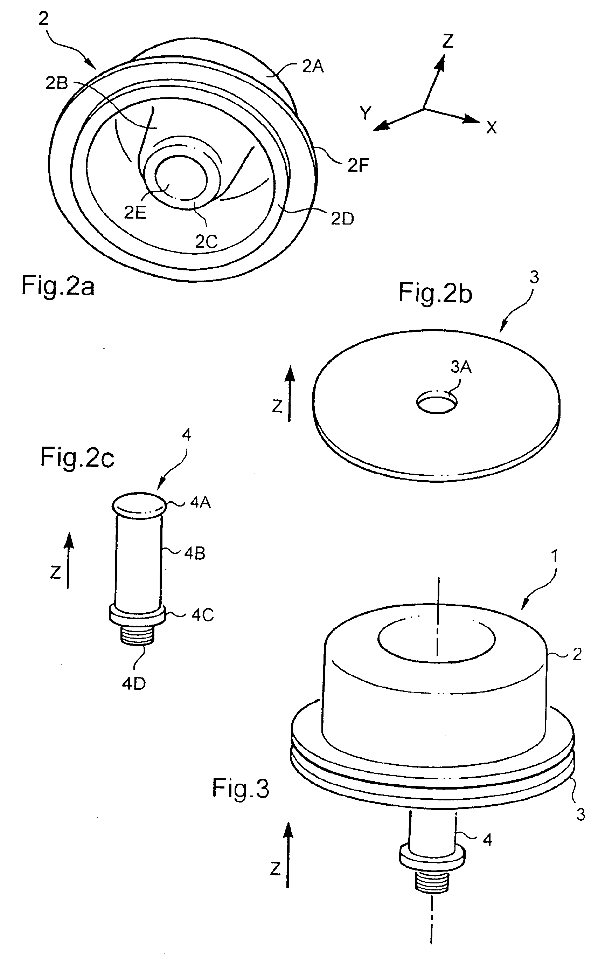

Comme le montre plus particulièrement la figure 2a, le premier élément 2 est un plot qui présente une forme de cloche avec une paroi périphérique 2A et, à l'état non déformé, un renfoncement central 2B retroussé vers l'intérieur de la paroi périphérique 2A. La paroi périphérique 2A comprend le long de sa tranche une collerette 2F sous laquelle s'étend un talon 2D. L'extrémité du renfoncement central 2B présente une surface 2C en forme de couronne au milieu de laquelle est défini un logement central 2E. Ce premier élément 2 est réalisé en caoutchouc de sorte que le renfoncement central 2B est adapté à se déplacer linéairement selon l'axe Z par rapport à la paroi périphérique 2A. Lorsque le premier élément 2 n'est pas contraint, l'extrémité du renfoncement central 2B s'étend au-delà de la tranche de la paroi périphérique 2A.

Comme le montre plus particulièrement la figure 2b, le deuxième élément 3 est une rondelle percée en son centre d'une ouverture 3A. Le diamètre extérieur du deuxième élément 3 est sensiblement égal au diamètre extérieur de la collerette 2F du premier élément 2. Les propriétés filtrantes du deuxième élément 3 dépendent de son épaisseur. Le deuxième élément 3 est généralement réalisé en plastique dur.

Comme le montre plus particulièrement la figure 2c, l'arbre 4 présente un corps 4B cylindrique dont le diamètre est sensiblement équivalent au diamètre de l'ouverture 3A du deuxième élément 3. A l'une de ses extrémités, l'arbre 4 présente une tête 4A de diamètre supérieur au diamètre de l'ouverture 3A. A l'autre de ses extrémités, l'arbre 4 présente tout d'abord une collerette 4C, elle aussi de diamètre supérieur au diamètre de l'ouverture 3A, puis un embout fileté 4D de diamètre inférieur au diamètre de la collerette 4C. Cet arbre 4 est généralement réalisé en acier.

Comme le montre la figure 1a, l'enjoliveur moteur 6 porte une cellule 6A. Cette cellule 6A est formée d'une paroi circulaire qui s'étend à partir de l'enjoliveur moteur 6 selon l'axe Z. Cette paroi circulaire définit un logement intérieur et porte à son extrémité un retour intérieur définissant une ouverture.

Afin d'assembler le premier et le deuxième élément 2,3, on soude le talon 2D du premier élément 2 sur le deuxième élément 3 de sorte que le bord du deuxième élément 3 s'étende en regard de la collerette 2F du premier élément 2 pour former une rainure périphérique 10 qui s'ouvre latéralement vers l'extérieur. Lors du soudage, l'extrémité du renfoncement central 2B prend appui sur le deuxième élément 3 et est translaté selon l'axe Z vers l'intérieur de la paroi périphérique 2A. Le premier élément 2, une fois soudé sur le deuxième élément 3, est donc précontraint. Le premier élément 2 et le deuxième élément 3 forment alors un ensemble bi-matières.

Afin d'assembler l'ensemble bi-matières et l'enjoliveur moteur 6, l'ensemble bi-matières est engagé dans le logement intérieur de la cellule 6A de l'enjoliveur moteur 6 avec sa rainure périphérique 10 emboîtée sur le retour intérieur de la paroi circulaire de la cellule 6A. Le premier élément 2 est alors disposé à l'intérieur de la cellule 6A et le deuxième élément 3 ferme l'ouverture de cette cellule 6A. L'emboîtement de la rainure périphérique 10 sur le retour intérieur de la cellule 6A est facilité dans la mesure où une des parois de cette rainure périphérique 10 constituée par la collerette 2F du premier élément 2 est en caoutchouc. Une fois emboîté, l'ensemble formé par l'enjoliveur moteur 6 et l'ensemble bi-matières présente une solidité importante dans la mesure où l'autre paroi de cette rainure périphérique 10 constituée par le bord du deuxième élément 3 présente une grande rigidité.

Afin d'assembler l'arbre 4 et le répartiteur d'air 5, L'arbre 4 est vissé par son embout fileté 4D dans le répartiteur d'air 5 du moteur du véhicule automobile jusqu'à ce que la collerette 4C de l'arbre 4 vienne en appui contre le répartiteur d'air 5.

En règle générale, on utilise quatre dispositifs de sécurité 1 pour réaliser la liaison entre l'enjoliveur moteur 6 et le répartiteur d'air 5 du véhicule automobile afin de la rendre plus robuste. Cette liaison est réalisée de sorte que l'enjoliveur moteur 6, lorsqu'aucun effort ne lui est appliqué, est positionné quelques centimètres au-dessus du répartiteur d'air 5. Il atténue ainsi efficacement les nuisances sonores produites par le moteur du véhicule automobile. Par ailleurs, cette position implique que la partie supérieure de l'enjoliveur moteur 6 est disposée dans un volume réservé, par sécurité, à la déformation du capot lors d'un choc du véhicule automobile contre un piéton.

Afin de monter l'enjoliveur moteur 6 au-dessus de l'admission d'air 5, un opérateur vient centrer les ensembles bi-matières liés à l'enjoliveur moteur 6 au-dessus des arbres 4 vissés dans le répartiteur d'air 5. Puis, il exerce un effort selon l'axe Z sur l'enjoliveur moteur 6 vers le répartiteur d'air 5 de sorte que les têtes 4A des arbres 4 passent en force au travers des ouvertures 3A des deuxièmes éléments 3 correspondants. La différence de taille entre les diamètres des ouvertures 3A et les diamètres des têtes 4A des arbres 4 détermine l'effort que doit exercer l'opérateur sur l'enjoliveur moteur 6 pour emboîter les ensembles bi-matières sur les arbres 4.

La tête 4A de chaque arbre 4 se loge alors dans le logement central 2E de chaque premier élément 2. Le logement central 2E maintient ainsi fixement en utilisation courante la tête 4A de l'arbre 4 contre le deuxième élément 3 grâce à l'effort de précontrainte. L'enjoliveur moteur 6 est donc solidement maintenu au dessus du répartiteur d'air 5.

Le deuxième élément 3 filtre quant à lui, toujours en utilisation courante, les vibrations produites par le moteur, en particulier les fréquences propres de l'enjoliveur moteur 1 afin que ce dernier n'entre pas en résonance.

La précontrainte de l'ensemble des dispositifs de sécurité liant l'enjoliveur moteur 6 au répartiteur d'air 5 est conçue afin que l'enjoliveur moteur 6 entre en mouvement lorsqu'il est soumis à un effort de précontrainte d'environ quatre cents newtons, soit environ cent newtons par dispositif de sécurité.

Comme le montre la figure 1b, lorsqu'un effort supérieur à cet effort de précontrainte est appliqué à l'enjoliveur moteur 1 selon la direction F, la tête 4A de l'arbre 4 maintient en place, par rapport au répartiteur d'air 5, le logement central 2E du premier élément 2. La cellule 6A de l'enjoliveur moteur 6 entraîne en revanche en translation dans la direction F le deuxième élément 3 ainsi que la paroi périphérique 2A du premier élément 2. Cette translation est guidée par l'ouverture centrale 3A qui glisse le long de l'arbre 4. L'enjoliveur moteur 6 est ainsi translaté vers le répartiteur d'air 5 selon l'axe de l'arbre 4.

Le renfoncement central 2B se retrousse vers l'extérieur sensiblement proportionnellement à l'effort appliqué à l'enjoliveur moteur 6 jusqu'à ce que l'effort appliqué à l'enjoliveur moteur 6 selon l'axe Z atteigne environ huit cents newtons. Cette déformation est alors arrêtée en translation lorsque le deuxième élément 3 vient en appui contre la collerette 4C de l'arbre 4.

Dans cette position déformée, l'enjoliveur moteur 6 est sorti du volume réservé, par sécurité, à la déformation du capot du véhicule automobile. Par ailleurs, dans cette position déformée, le premier élément 2 n'a subi qu'une déformation élastique.

Lorsque l'effort appliqué à l'enjoliveur moteur redevient inférieur à l'effort de précontrainte, l'ensemble des éléments du dispositif de sécurité 1 reprend sa position initiale. En effet, le seul élément ayant été déformé est le premier élément 2 et sa déformation est restée élastique sur toute sa course de déformation. Le dispositif de sécurité 1 est ainsi réutilisable.

## Revendications

1. Dispositif de sécurité (1) destiné à lier une pièce mobile (6) à une pièce fixe (5) d'un véhicule automobile, comprenant un premier élément (2) adapté à se déformer pour autoriser un déplacement en translation de ladite pièce mobile (6) par rapport à ladite pièce fixe (5) sous l'effet d'un effort appliqué à ladite pièce mobile (6), ledit premier élément (2) étant un élément élastiquement déformable lié à l'une desdites pièces mobile et fixe (6,5), et en ce qu'il est prévu un arbre (4) raccordé audit premier élément (2) ainsi qu'à l'autre des deux pièces mobile et fixe (6,5), qui est apte à provoquer la déformation élastique dudit premier élément (2) lorsque ladite pièce mobile (6) reçoit ledit effort, **caractérisé en ce qu'**il comprend un deuxième élément (3) adapté à absorber au moins une partie des vibrations de la pièce fixe (5), ce deuxième élément (3) étant lié à la pièce (6; 5) du véhicule à laquelle est rattaché ledit premier élément (2) et entourant ledit arbre (4) de manière à former un guide lors d'un mouvement de coulissement relatif dudit deuxième élément (3) par rapport audit arbre (4).

2. Dispositif de sécurité (1) selon la revendication 1, **caractérisé en ce que** le premier élément (2) et le deuxième élément (3) sont soudés l'un à l'autre.

3. Dispositif de sécurité (1) selon l'une des revendications 1 ou 2, **caractérisé en ce que** le premier élément (2) et le deuxième élément (3) sont emboîtés sur ladite pièce mobile (6) de sorte qu'ils puissent être démontés.

4. Dispositif de sécurité (1) selon l'une des revendications 1 à 3, **caractérisé en ce que** le deuxième élément (3) est une rondelle pourvue d'une ouverture centrale traversée par l'arbre (4) qui présente une extrémité (4A) dont une face prend appui sur le premier élément (2) et dont l'autre face s'appuie sur le deuxième élément (3) lorsque ledit premier élément (2) est dans un état non déformé.

5. Dispositif de sécurité (1) selon l'une des revendication 1 à 4, **caractérisé en ce que** l'arbre (4) est rattaché à la pièce fixe (5) et le premier élément (2) à la pièce mobile (6).

6. Dispositif de sécurité (1) selon l'une des revendications 1 à 5, **caractérisé en ce que** le premier élément (2) est précontraint.

7. Dispositif de sécurité (1) selon l'une des revendications 1 à 6, **caractérisé en ce que** l'arbre (4) est adapté à bloquer la déformation dudit premier élément (2) lorsque l'effort appliqué à la pièce mobile (6) est supérieure à un effort maximal.

8. Dispositif de sécurité (1) selon l'une des revendications 1 à 7, **caractérisé en ce que** le premier élément (2) est un plot réalisé en caoutchouc.

9. Dispositif de sécurité (1) selon l'une des revendications 1 à 8, **caractérisé en ce que** ladite pièce mobile (6) est un enjoliveur moteur et ladite pièce fixe (5) un bloc moteur du véhicule automobile.

## Claims

1. Safety device (1) intended to connect a moving part (6) to a fixed part (5) of a motor vehicle, comprising a first element (2) designed to deform to allow the said moving part (6) a translational movement relative to the said fixed part (5) under the effect of a load applied to the said moving part (6), the said first element (2) being an elastically deformable element connected to one of the said moving and fixed parts (6, 5), and there being a shaft (4) connected to the said first element (2) and to the other of the two, moving and fixed, parts (6, 5), which is capable of causing the elastic deformation of the said first element (2) when the said moving part (6) receives the said load, **characterized in that** it comprises a second element (3) designed to absorb at least some of the vibration of the fixed part (5), this second element (3) being connected to that part (6; 5) of the vehicle to which the said first element (2) is attached and surrounding the said shaft (4) so as to form a guide for relative sliding movement of the said second element (3) relative to the said shaft (4).

2. Safety device (1) according to Claim 1, **characterized in that** the first element (2) and the second element (3) are welded together.

3. Safety device (1) according to one of Claims 1 and 2, **characterized in that** the first element (2) and the second element (3) are nested in the said moving part (6) in such a way that they can be removed.

4. Safety device (1) according to one of Claims 1 to 3, **characterized in that** the second element (3) is a washer provided with a central opening through which the shaft (4) passes, which shaft has an end (4A) one face of which bears against the first element (2) and the other face of which bears against the second element (3) when the said first element (2) is in the non-deformed state.

5. Safety device (1) according to one of Claims 1 to 4, **characterized in that** the shaft (4) is attached to the fixed part (5) and the first element (2) is attached to the moving part (6).

6. Safety device (1) according to one of Claims 1 to 5, **characterized in that** the first element (2) is preloaded.

7. Safety device (1) according to one of Claims 1 to 6, **characterized in that** the shaft (4) is designed to prevent deformation of the said first element (2) when the load applied to the moving part (6) exceeds a maximum load.

8. Safety device (1) according to one of Claims 1 to 7, **characterized in that** the first element (2) is a rubber mount.

9. Safety device (1) according to one of Claims 1 to 8, **characterized in that** the said moving part (6) is an engine cover and the said fixed part (5) is an engine block of a motor vehicle.

## Patentansprüche

1. Sicherheitsvorrichtung (1), die dazu vorgesehen ist, ein bewegliches Teil (6) mit einem festen Teil (5) eines Kraftfahrzeugs zu verbinden, mit einem ersten Element (2), das dazu ausgelegt ist, sich zu verformen, um eine translatorische Verlagerung des beweglichen Teils (6) in Bezug auf das feste Teil (5) unter der Wirkung einer auf das bewegliche Teil (6) ausgeübten Kraft zuzulassen, wobei das erste Element (2) ein elastisch verformbares Element ist, das entweder mit dem beweglichen Teil (6) oder mit dem festen Teil (5) verbunden ist, und eine Welle (4) vorgesehen ist, die mit dem ersten Element (2) sowie mit dem jeweils anderen des beweglichen und des festen Teils (6, 5) verbunden ist und dazu ausgelegt ist, die elastische Verformung des ersten Elements (2) hervorzurufen, wenn das bewegliche Teil (6) die Kraft aufnimmt, **dadurch gekennzeichnet, dass** sie ein zweites Element (3) enthält, das dazu ausgelegt ist, wenigstens einen Teil der Schwingungen des festen Teils (5) zu absorbieren, wobei dieses zweite Element (3) mit dem Teil (6; 5) des Fahrzeugs, an dem das erste Element (2) befestigt ist, verbunden ist und die Welle (4) in der Weise umgibt, dass bei einer relativen Gleitbewegung des zweiten Elements (3) in Bezug auf die Welle (4) eine Führung gebildet wird.

2. Sicherheitsvorrichtung (1) nach Anspruch 1, **dadurch gekennzeichnet, dass** das erste Element (2) und das zweite Element (3) miteinander verschweißt sind.

3. Sicherheitsvorrichtung (1) nach einem der Ansprüche 1 oder 2, **dadurch gekennzeichnet, dass** das erste Element (2) und das zweite Element (3) an dem beweglichen Teil (6) zusammengefügt sind, derart, dass sie abnehmbar sind.

4. Sicherheitsvorrichtung (1) nach einem der Ansprüche 1 bis 3, **dadurch gekennzeichnet, dass** das zweite Element (3) eine runde Scheibe ist, die mit einer mittigen Öffnung versehen ist, durch die die Welle (4) verläuft, die ein Ende (4A) aufweist, wovon sich eine Fläche an dem ersten Element (2) abstützt und wovon sich die andere Fläche an dem zweiten Element (3) abstützt, wenn das erste Element (2) in einem nicht verformten Zustand ist.

5. Sicherheitsvorrichtung (1) nach einem der Ansprüche 1 bis 4, **dadurch gekennzeichnet, dass** die Welle (4) an dem festen Teil (5) befestigt ist und das erste Element (2) an dem beweglichen Teil (6) befestigt ist.

6. Sicherheitsvorrichtung (1) nach einem der Ansprüche 1 bis 5, **dadurch gekennzeichnet, dass** das erste Element (2) vorbelastet ist.

7. Sicherheitsvorrichtung (1) nach einem der Ansprüche 1 bis 6, **dadurch gekennzeichnet, dass** die Welle (4) dazu ausgelegt ist, die Verformung des ersten Elements (2) zu blockieren, wenn die auf das bewegliche Teil (6) ausgeübte Kraft größer als eine maximale Kraft ist.

8. Sicherheitsvorrichtung (1) nach einem der Ansprüche 1 bis 7, **dadurch gekennzeichnet, dass** das erste Element (2) ein aus Kautschuk verwirklichter Stopfen ist.

9. Sicherheitsvorrichtung (1) nach einem der Ansprüche 1 bis 8, **dadurch gekennzeichnet, dass** das bewegliche Teil (6) ein Motorverkleidungsdeckel ist und das feste Teil (5) ein Motorblock des Kraftfahrzeugs ist.
